# EUROPÄISCHE PATENTSCHRIFT

(11) **EP 2 751 897 B1**
(45) Veröffentlichungstag und Bekanntmachung des Hinweises auf die Patenterteilung: **14.10.2015**
(21) Anmeldenummer: 12751527.8
(22) Anmeldetag: 30.08.2012
(51) Int. Cl.: H02J 3/18, H02J 3/38

(54) **SCHNELLE SPANNUNGSREGELUNG**
FAST VOLTAGE CONTROL
RÉGLAGE DE TENSION RAPIDE

(30) Priorität: 31.08.2011 DE 102011112025
(43) Veröffentlichungstag der Anmeldung: 09.07.2014
(73) Patentinhaber: Senvion GmbH, 22297 Hamburg (DE)
(72) Erfinder: FORTMANN, Jens, 13156 Berlin (DE); CAI, Lijun, 24106 Kiel (DE)
(74) Vertreter: Glawe, Delfs, Moll
(86) Internationale Anmeldenummer: PCT/EP2012/066887
(87) Internationale Veröffentlichungsnummer: WO 2013/030293

(56) Entgegenhaltungen:
- DE-A1-102004 048 341

## Beschreibung

Die Erfindung betrifft einen Windpark mit mindestens zwei Windenergieanlagen, die jeweils einen Generator mit einem Umrichter zur Erzeugung elektrischer Energie und eine Betriebssteuerung aufweisen, einem Parkmaster zur zentralen Kontrolle der Windenergieanlagen über ein Kommunikationsnetz, und einem Verbindungsnetz, welches die Windenergieanlagen zur Einspeisung der erzeugten elektrischen Energie mit einem Verknüpfungspunkt an einem Netz verbindet sowie Messeinrichtungen zur Bestimmung elektrischer Parameter am Verknüpfungspunkt, wobei der Parkmaster dazu ausgebildet ist, elektrische Parameter vom Verknüpfungspunkt zu bestimmen und Sollwerte für die Windenergieanlagen zu generieren und an sie zu übermitteln.

Für den Betrieb von Windparks am elektrischen Übertragungsnetz ist es wegen der zunehmenden Anzahl und Größe der Windparks von steigender Bedeutung, dass sie ihren Beitrag zur Sicherung der Stabilität des Netzes leisten. Seitens der Netzbetreiber werden Forderungen in Bezug auf einen Beitrag zur Spannungsstabilität und zur Einspeisung von Blindleistung erhoben. Maßgeblich hierfür sind die Verhältnisse am Verknüpfungspunkt (Point of Common Coupling, PCC), über den der Windpark mit dem Netz verbunden ist. Gerade bei großen Windparks mit einer beträchtlichen Anzahl an Windenergieanlagen besteht jedoch eine umfangreiche verzweigte Struktur des parkinternen Verbindungsnetzes, was eine exakte Einstellung der einzelnen Windenergieanlagen auf den am zentralen Verbindungspunkt zu erreichenden Wert erschwert. Denn aufgrund langer Leitungen in solchen großen Windparks, sei es zur Windenergieanlage oder bis zum zentralen Verbindungspunkt, und anderer Betriebsmittel, wie insbesondere dem Hochspannungstransformator, ergeben sich beträchtliche kapazitive bzw. induktive Nebenlasten. All dies macht eine gezielte Einstellung der Spannung und Blindleistung schwierig.

Es wird daher versucht, mittels geeigneter Maßnahmen die einzelnen Windenergieanlagen im Windpark so anzusteuern, dass der Einfluss der Leitungen und Betriebsmittel bis zum Verknüpfungspunkt entsprechend berücksichtigt ist. Aus der US 6,924,565 ist es bekannt, die elektrischen Parameter der Verbindungsleitung vom Windpark bis zum zentralen Verknüpfungspunkt zu berücksichtigen. Dazu werden die elektrischen Parameter der Leistung erfasst und die sich daraus ergebenden Änderungen, insbesondere Spannungsverlust, bestimmt. Sie werden ausgeglichen, indem der Parkmaster einen entsprechenden Kompensationswert berechnet. Im Ergebnis erfolgt also eine Spannungsregelung auf dem den Windpark vorgelagerten zentralen Verknüpfungspunkt. Ferner ist es bekannt, innerhalb des Windparks die einzelnen Anschlussstrecken des parkinternen Verbindungsnetzes zu den einzelnen Windenergieanlagen zu bestimmen (EP 2 267 306 A2). Hierzu sind im Parkmaster zentral die Netzeigenschaften des Verbindungsnetzes zwischen den Windenergieanlagen und dem zentralen Verbindungspunkt berücksichtigt. Ein Nachteil dieser bekannten Ansätze liegt darin, dass die Regelzeiten des Parkmasters insbesondere bei großen Windparks so langsam werden, dass es unter ungünstigen Bedingungen zu Mitkopplungen kommen kann. Im Betrieb kommt es so insbesondere im Fall von Windgeschwindigkeitsschwankungen oder Regeleingriffen anderer Netzteilnehmer zu Schwingungsphänomenen, die sich aufschaukeln können. Damit drohen gravierende Instabilitäten im Windpark.

Der Erfindung liegt die Aufgabe zugrunde, eine verbesserte Spannungsregelung im Windpark zu schaffen.

Die erfindungsgemäße Lösung liegt in den Merkmalen der unabhängigen Ansprüche. Vorteilhafte Weiterbildungen sind Gegenstand der abhängigen Ansprüche.

Bei einem Windpark mit mindestens zwei Windenergieanlagen, die jeweils einen Generator mit einem Umrichter zur Erzeugung elektrischer Energie und eine Betriebssteuerung mit einem Blindleistungsregler aufweisen, einem Parkmaster zur zentralen Kontrolle der Windenergieanlage über ein Kommunikationsnetz, einem Verbindungsnetz, welches die Windenergieanlagen mit einem Verknüpfungspunkt verbindet zur Einspeisung der erzeugten elektrischen Energie in ein Netz, und einer Messeinrichtung zur Bestimmung elektrischer Parameter am Verknüpfungspunkt, wobei der Parkmaster dazu ausgebildet ist, elektrische Parameter am Verknüpfungspunkt zu bestimmen und Sollwerte an die Windenergieanlagen zu übermitteln, ist erfindungsgemäß vorgesehen, dass der Blindleistungsregler der jeweiligen Windenergieanlage eine Doppelvorsteuerung aufweist, die mit ihrem ersten Zweig umfassend ein Spannungsvorsteuermodul am Eingang eines Reglerkerns des Blindleistungsreglers und mit ihrem zweiten Zweig umfassend ein Blindleistungsnachsteuermodul an dem Ausgang des Reglerkerns angeschlossen sind.

Unter der Doppelvorsteuerung wird vorliegend eine Struktur verstanden, bei der am Eingang eines Reglers zusätzlich zu dem ohnehin am Eingang anliegenden Führungssignal ein erster Zweig aufgeschaltet ist und am Ausgang des Reglerkerns zusätzlich zu der dort ohnehin ausgegebenen Stellgröße ein zweiter Zweig aufgeschaltet ist. Die beiden Zweige werden als Vorsteuermodule ausgebildet, wobei der erste Zweig zur Vorsteuerung eines Spannungssignals und der zweite Zweig - da hinter dem Regelkern angeschlossen - zur Nachsteuerung der Blindleistung ausgebildet ist. Mit dem Spannungsvorsteuermodul im ersten Zweig wird erreicht, dass ein von dem Parkmaster vorgegebener globaler Spannungssollwert entsprechend den vorherrschenden elektrischen Bedingungen so angepasst werden kann, dass ein korrigierter lokaler Spannungssollwert berechnet und auf das Eingangssignal des Reglerkerns aufgeschaltet wird. Damit kann ein schnelleres Ansprechen erreicht werden. Mittels des zweiten Zweigs werden Blindleistungsverluste von der Windenergieanlage zum Verbindungspunkt kompensiert. Das durch den ersten Zweig bereits auf Spannungsunterschiede hin korrigierte Eingangssignal des Reglerkerns wird hinsichtlich seines Ausgangssignals dadurch noch zusätzlich verbessert.

Unter einem Blindleistungsregler wird eine Einrichtung der Windenergieanlage verstanden, welche die von der Windenergieanlage abgegebene Blindleistung kontrolliert.

Mit dieser besonderen lokalen Struktur für die Bestimmung der Blindleistung in der Betriebssteuerung der jeweiligen Windenergieanlage ergeben sich beträchtliche Vorteile. So ergibt sich dank der Spannungsvorsteuerung ein wesentlich schnelleres Regelverhalten. Spannungsabfälle im Verbindungsnetz aufgrund der Lage und Anordnung der Windenergieanlage werden auf diese Weise effektiv bereits im Vorfeld ausgeglichen. Außerdem wird ein Genauigkeitsvorteil erreicht, nämlich unter Nutzung des Nachsteuermoduls für die Blindleistung. Damit kann von vornherein der zu erwartende Blindleistungsverlust auf der Leitungsstrecke bis zum zentralen Verbindungspunkt ausgeglichen werden. Damit ermöglicht die erfindungsgemäße Anordnung eine wesentlich schnellere Regelung, die zudem noch genauer ist. Die Erfindung erreicht dies, indem sie die Kompensation für die unterschiedlichen Verhältnisse in Bezug auf die einzelnen Windenergieanlagen vom Parkmaster weg und lokal in die einzelnen Windenergieanlagen verlegt. Dadurch wird nicht nur der Parkmaster entlastet, sondern es wird auch wegen des Verzichts auf die Übermittlung entsprechend häufig aktualisierter Werte eine Entlastung der Kommunikationspfade im Park erreicht. Insgesamt kann damit eine so hohe Regelgeschwindigkeit erreicht werden, wie sie bei einer zentralen Vorgabe durch den Parkmaster nicht erreichbar wäre. Dank der Erfindung kann sich die Rolle des Parkmasters darauf beschränken, globale Sollwerte zu vergeben, die global für alle Windenergieanlagen gelten. Die jeweiligen spezifischen Anpassungen an die einzelnen Windenergieanlagen, die sich aufgrund ihrer Topologie im Verbindungsnetz ergibt, werden lokal vorgenommen, und zwar auf die beanspruchte Weise. Mit dieser speziellen Anordnung kann daher eine schnellere und insgesamt stabilere Regelung erreicht werden, die zudem auch noch genauer ist.

Vorzugsweise sind der erste und der zweite Zweig an einem gemeinsamen Signaleingang angeschlossen. Damit sind Vorsteuer- und Nachsteuermodule mit derselben Eingangsgröße beaufschlagt, was einen funktionalen Gleichlauf sichert. Als besonders geeignet als Eingangssignal hat sich ein Signal für den Quadraturstrom I_{q} im feldorientierten Koordinatensystem erwiesen.

Vorzugsweise weist das Spannungsvorsteuermodul einen Spannungsabfallschätzer für den Abschnitt des Verbindungsnetzes von der jeweiligen Windenergieanlage zum Verknüpfungspunkt (Strecke) auf. Es hat sich gezeigt, dass durch Abschätzen dieses Spannungsabfalls eine besonders effiziente Vorsteuerung erreicht werden kann. Bewährt hat es sich, wenn im Spannungsabfallschätzer ein impedanzbasiertes Modell der Strecke implementiert ist. Mittels eines solchen impedanzbasierten Modells kann auf besonders zweckmäßige Weise unter Verwendung eines Stromsignals ein Stromssignaleingang, wie es aus der Betriebssteuerung für den Rotor des Generators ohnehin vorliegt, ein erstaunlich treffsicherer Vorhersagewert für den Spannungsabfall auf der Strecke bestimmt werden. Überraschenderweise hat sich weiter gezeigt, dass es bei vielen Windparks mit nicht zu stark vermaschtem und verzweigtem Verbindungsnetz genügt, einen Durchschnittswert für die Impedanz der Strecke von den Windenergieanlagen zu implementieren. Es sind also nicht zwingend individuelle Werte erforderlich, was gerade bei großen Windparks mit einer Vielzahl von Windenergieanlagen eine beträchtliche Erleichterung darstellt. Die erfindungsgemäß vorgesehene Vorsteuerung ist also nicht nur schnell und genau, sondern insoweit auch robust.

Eine weitere Verbesserung der Qualität der Vorsteuerung kann noch erreicht werden, wenn ein Eingang für die tatsächlich an der Windenergieanlage anliegende Spannung vorgesehen ist.

Das Blindleistungsnachsteuermodul weist vorzugsweise einen Blindleistungskompensator auf. Dieser ist dazu ausgebildet, den bei den aktuellen Betriebsbedingungen, insbesondere dem gemäß dem angelegten Stromsignal fließenden Strom, auftretenden Blindleistungsverlust über die Strecke abzuschätzen. Mit Vorteil weist der Blindleistungskompensator dazu ein reaktanzbasiertes Modell der Strecke auf. Mittels eines solchen reaktanzbasierten Modells kann auf besonders einfache Weise aus dem Quadrat des angelegten Stromsignals unmittelbar ein Maß für den zu erwartenden Blindleistungsverlust gewonnen werden. Damit kann für jede Windenergieanlage genau dieser zu erwartende Blindleistungsverlust zusätzlich auf das vom Blindleistungsregler ausgegebene Stellsignal aufgeschaltet und somit kompensiert werden.

Überraschenderweise hat sich auch in Bezug auf den Blindleistungskompensator gezeigt, dass das reaktanzbasierte Modell bei den meisten Windparks auf einen Durchschnittswert der Reaktanz der Strecke beruhen kann. Dies stellt eine beträchtliche Vereinfachung dar.

Gemäß einem besonders vorteilhaften Aspekt der Erfindung, der gegebenenfalls unabhängigen Schutz verdient, weist die Windenergieanlagensteuerung ferner einen Beobachter für die Impedanz einer Windenergieanlage auf, der vorzugsweise mit einem Adaptionsglied für Parameter der Betriebssteuerung zusammenwirkt.

Unter einem Beobachter wird eine Einrichtung verstanden, welche einen direkt nicht oder nur schwer messbaren Parameter als einen oder in den meisten Fällen eine Mehrzahl anderer Parameter bestimmt. Solche Beobachter sind bezüglich ihrer Theorie und ihrer Anwendung für Zustandsregelung insbesondere von Luenberger beschrieben worden und dem Fachmann an sich bekannt. Demnach ist vorgesehen, dass die Windenergieanlagensteuerung einen Beobachter für die Impedanz an der Windenergieanlage aufweist, wobei der Beobachter vorzugsweise mit einem Adaptionsglied für Parameter der Windenergieanlagensteuerung zusammenwirkt. Der Beobachter ist so ausgebildet, um die an der Windenergieanlage herrschende Impedanz zu bestimmen. Der damit gewonnene Wert für die Netzimpedanz an der Windenergieanlage kann dem Adaptionsglied zugeführt werden, welches in an sich bekannter Weise im Sinne eines selbst einstellenden Reglers Reglerparameter der Betriebssteuerung der Windenergieanlage einstellt. Mittels einer solchen adaptiven Regelung kann eine deutliche Verbesserung erreicht werden.

Vorzugsweise ist der Beobachter so ausgebildet, dass als Eingangsgrößen Spannungs- und/oder Stromsignale und Ausgangsgrößen der Windenergieanlagensteuerung, insbesondere des Blindleistungsreglers, angelegt sind. Damit kann eine besonders zielgerichtete Identifikation durch den Beobachter und damit eine gezielte Adaption erfolgen.

Mit Vorteil wirkt das Adaptionsglied auf einen Blindleistungsregler ein, der auf den Umrichter der Windenergieanlage wirkt. Hierbei kann es sich mit Vorteil um einen PI-Regler handeln. Derartige Regler eignen sich besonders für eine adaptive Selbsteinstellung.

Vorzugsweise sind in dem Adaptionsglied mehrere Kennfelder implementiert, die je nach Betriebszustand der Windenergieanlage abrufbar sind. Der Betriebszustand der Windenergieanlage kann sich hierbei aus ohnehin vorhandenen Daten in der Betriebssteuerung ergeben, oder anhand zusätzlicher Parameter, die auch mittels des Beobachters gewonnen sein können, abgerufen werden. Insbesondere kann der Beobachter Veränderungen in der Netzimpedanz feststellen, die sich beispielsweise durch Veränderungen ergeben, die während des Betriebs der Windenergieanlagen am Windpark auftreten können. Insbesondere kann es dazu kommen, dass nicht alle Windenergieanlagen eines Windparks laufen, wodurch sich Unterschiede in der parkinternen Netzimpedanz für die noch im Betrieb befindlichen Windenergieanlagen ergeben. Mittels des Beobachters kann diese Situation erfasst und im Zusammenwirken mit dem Adaptionsglied beispielsweise auf ein dafür geeignetes anderes Kennfeld umgeschaltet werden. Sind mehrere situationsabhängige Kennfelder im Adaptionsglied vorhanden, kann damit eine effiziente Anpassung an verschiedene Vorgänge erreicht werden. Dank der optimierten Anpassung können auch bei transienten Netzvorgängen oder schnellen Regelvorgängen optimale Reaktionen erreicht werden. Ferner kann vorgesehen sein, dass als Eingangsgrößen zusätzlich Spannungs- und/oder Stromsignale anderer Windenergieanlagen angelegt sind. Damit kann feiner auf situative Besonderheiten, wie sie sich in dem Betrieb der anderen Windenergieanlage abbilden, reagiert werden.

Mit Vorteil wirkt der Impedanzbeobachter mit dem Spannungsabfallschätzer zusammen. Damit ist das Spannungsvorsteuermodul nicht auf eine statische Berechnungsgrundlage für die Impedanz angewiesen, sondern kann dynamisch an die jeweilige Betriebssituation angepasst werden. Mittels des Beobachters gelingt dies auf einfache und effiziente Weise. Zweckmäßigerweise wird dazu ein Wert für die Impedanz an dem Verknüpfungspunkt, beispielsweise vom Parkmaster abgerufen, und von diesem der von dem Beobachter bestimmte Wert für die Impedanz an der Windenergieanlage abgezogen. Auf diese Weise kann die für den Spannungsabfallschätzer benötigte Impedanz der Strecken von der jeweiligen Windenergieanlage zum Verknüpfungspunkt ohne weiteres bestimmt werden. Damit ergibt sich eine weitere Steigerung der Genauigkeit des Spannungsabfallschätzers. Ferner kann aus dem von dem Beobachter ermittelten Maß für die Impedanz mittels bekannter komplexer Rechnung so ein Maß für die Reaktanz abgeleitet werden und an dem Blindleistungskompensator angelegt sein. Damit profitiert auch der Blindleistungskompensator hinsichtlich seiner Berechnungsgüte.

Die Erfindung bezieht sich ferner auf eine Windenergieanlage, welche zum Betrieb in einem Windpark, wie vorstehend beschrieben, ausgeführt ist. Weiter bezieht sich die Erfindung auf ein entsprechendes Verfahren und Betreiben einer Windenergieanlage in einem solchen Windpark. Zur näheren Erläuterung wird auf vorstehende Beschreibung verwiesen.

Die Erfindung wird nachfolgend unter Bezugnahme auf die beigefügte Zeichnung näher erläutert, in der ein vorteilhaftes Ausführungsbeispiel dargestellt ist. Es zeigen:
- Fig. 1: eine Übersichtsdarstellung eines Windparks gemäß einem Ausführungsbeispiel als ein elektrisches Satzschaltbild;
- Fig. 2: eine Funktionsblockansicht einer Windenergieanlage für den Windpark;
- Fig. 3: eine vereinfachte Blockdarstellung eines Reglerkerns der Windenergieanlage;
- Fig. 4: eine Blockdarstellung eines Blindleistungsreglers mit Doppelvorsteuerung;
- Fig. 5: eine schematische Darstellung einer Regelung für einen netzseitigen Umrichter;
- Fig. 6: eine schematische Darstellung gemäß Fig. 5 mit einem Beobachter; und
- Fig. 7: ein Diagramm zur Spannungsregelung gemäß der Erfindung.

Gemäß einem Ausführungsbeispiel der Erfindung umfasst ein Windpark einen Parkmaster 1 zur Kontrolle mehrerer Windenergieanlagen 5, mit denen er über ein Kommunikationsnetz 2 verbunden ist. Die Windenergieanlagen 5 speisen die von ihnen erzeugte elektrische Energie in ein parkinternes Verbindungsnetz 3 ein, welches über einen Hochspannungstransformator 34 an einen Verknüpfungspunkt 4 angeschlossen ist. Der Verknüpfungspunkt 4 bildet einen Übergang zum in der Regel öffentlichen Energieübertragungsnetz 9.

Der Parkmaster 1 kann Eingänge 10 für Sollwerte aufweisen, wie sie von einer übergeordneten Instanz, insbesondere einer Netzbetreiberwarte (nicht dargestellt) vorgegeben sind. Hierbei kann es sich um Sollwerte für Spannung, Wirkleistung, Blindleistung, Phasenwinkel oder Leistungsfaktor handeln. Weiter weist der Parkmaster einen Eingang 11 auf, an dem Signale einer am Verknüpfungspunkt 4 angeordneten Messeinrichtung 12, 13 angelegt sind. Bei den Messsignalen handelt es sich vorzugsweise um Messsignale für Spannung und Strom. Es können aber auch Signale für Wirkleistung, Blindleistung oder Leistungsfaktor vorgesehen sein.

Die Windenergieanlagen sind über jeweils einen Mittelspannungstransformator 54 an einem Anschlusspunkt 55 an das parkinterne Verbindungsnetz 3 angeschlossen. Die Windenergieanlagen 5 weisen jeweils einen Generator 50, einen Umrichter 6 sowie eine Betriebssteuerung 52 auf.

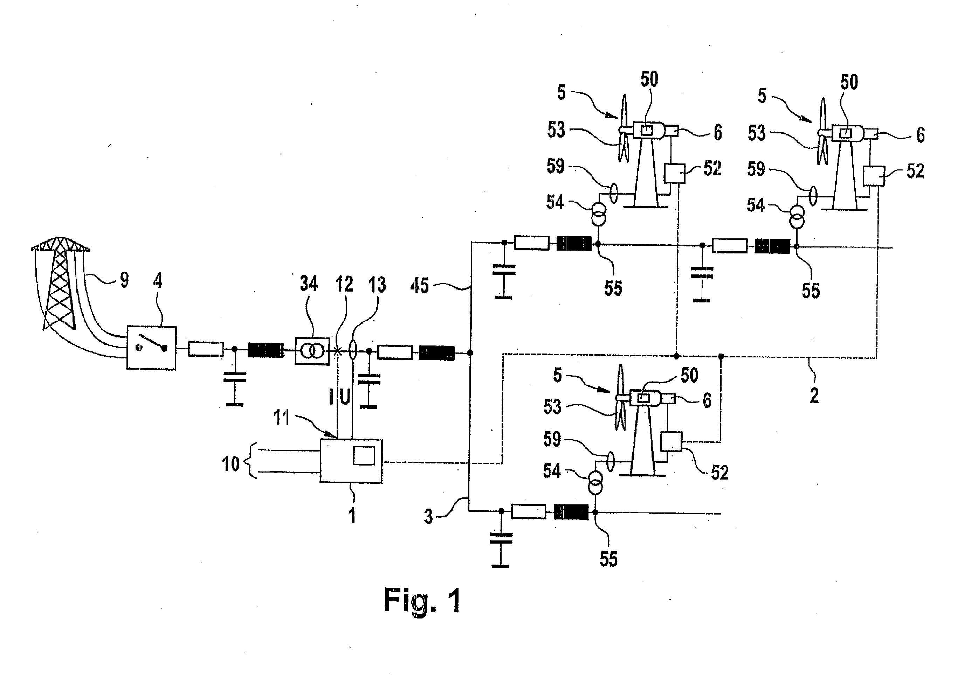

Die in Fig. 1 gewählte Darstellung des Windparks im elektrischen Ersatzschaltbild zeigt die elektrischen Charakteristika insbesondere für das Verbindungsnetz 3 und dessen Anschluss über den Verknüpfungspunkt 4 an das Übertragungsnetz 9. Die einzelnen Windenergieanlagen 5 sind über Strecken des Verbindungsnetzes 3 mit dem Haupttransformator 34 verbunden, welcher dem Verknüpfungspunkt 4 vorgeschaltet ist. Die zu den jeweiligen Windenergieanlagen führenden Zweigleitungen weisen eine Impedanz sowie eine Reaktanz auf. Dies gilt sowohl für Windenergieanlagen, die für sich an einem Zweig angeschlossen sind (sternförmig), oder Windenergieanlagen, die hintereinander an demselben Zweig angeordnet sind (Verkettung). Die sich bis zum nächsten Knoten jeweils ergebende Impedanz und Reaktanz sind als konzentrierte Elemente in Figur 1 dargestellt. Man erkennt ohne weiteres, dass weit hinten gelegene Windenergieanlagen über eine Strecke 45 mit beträchtlich größeren Impedanzen bzw. Reaktanzen mit dem gemeinsamen Verknüpfungspunkt 4 verbunden sind als dicht anbei stehende Windenergieanlagen. Speist beispielsweise die ganz hinten am oberen Ast angeordnete Windenergieanlage 5 elektrische Leistung ein, so wird bei ihr wegen der erheblichen Reaktanzen und Impedanzen in der Strecke 45 eine beträchtliche Spannungsüberhöhung auftreten. Die Windenergieanlage 5 braucht demnach höhere Sollwertvorgaben für die Spannung, als beispielsweise eine in elektrischer Hinsicht näher an dem Verknüpfungspunkt 4 angeordnete Windenergieanlage 5.

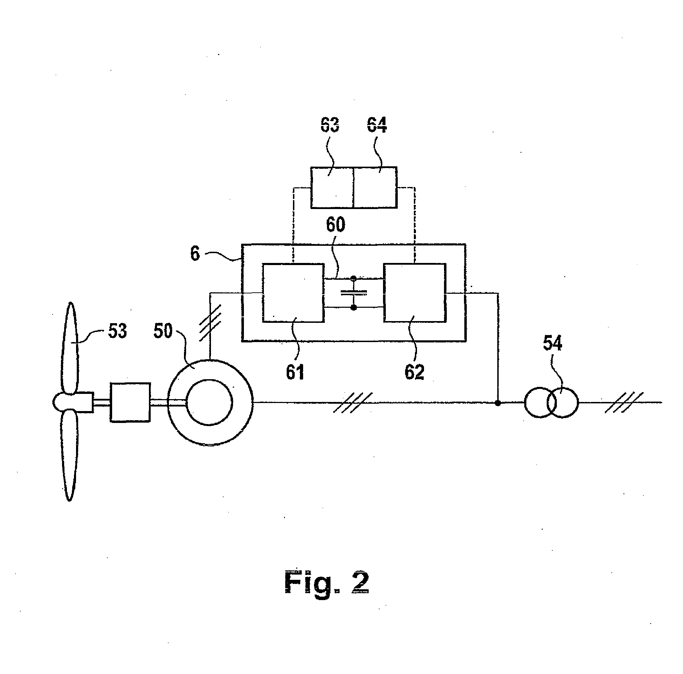

Der funktionale Aufbau der Windenergieanlagen am Beispiel der Windenergieanlage 5 ist näher anhand Fig. 2 erläutert. Ein Windrotor 53 treibt über ein optionales Getriebe einen Generator 50 an, der in dem dargestellten Ausführungsbeispiel als doppelt gespeiste Asynchronmaschine mit einer Rotorwicklung und einer Statorwicklung ausgeführt ist. Die Statorwicklung ist unmittelbar an den Mittelspannungstransformator 54 angeschlossen. Die Rotorwicklung ist über einen Umrichter 6 mit dem Mittelspannungstransformator 54 angeschlossen. Der Umrichter 6 weist zwei Wechselrichter, einen maschinenseitigen Wechselrichter 61 und einen netzseitigen Wechselrichter und einen dazwischen angeordneten Zwischenkreis 60 auf. Die Wechselrichter 61, 62 sind jeweils angesteuert von einer zugeordneten Umrichtersteuerung 63, 64, welche wiederum ihre Führungssignale von der Betriebssteuerung 52 der Windenergieanlage 5 bezieht. Die Steuerung 64 des netzseitigen Wechselrichters 62 ist dazu ausgebildet, zum einen den Wirkleistungsfluss so einzustellen, dass die Spannung im Zwischenkreis 60 auf einem gewünschten Wert liegt, zum anderen ist sie dazu ausgebildet, die von dem netzseitigen Wechselrichter 62 über den Mittelspannungstransformator 54 abgegebene Blindleistung zu steuern. Es sei an dieser Stelle daran erinnert, dass die vorstehende Erläuterung lediglich am Beispiel einer doppelt gespeisten Asynchronmaschine erfolgt; die Erfindung ist auch auf andere Generator-/Umrichterkonzepte mit steuerbarer Blindleistung anwendbar.

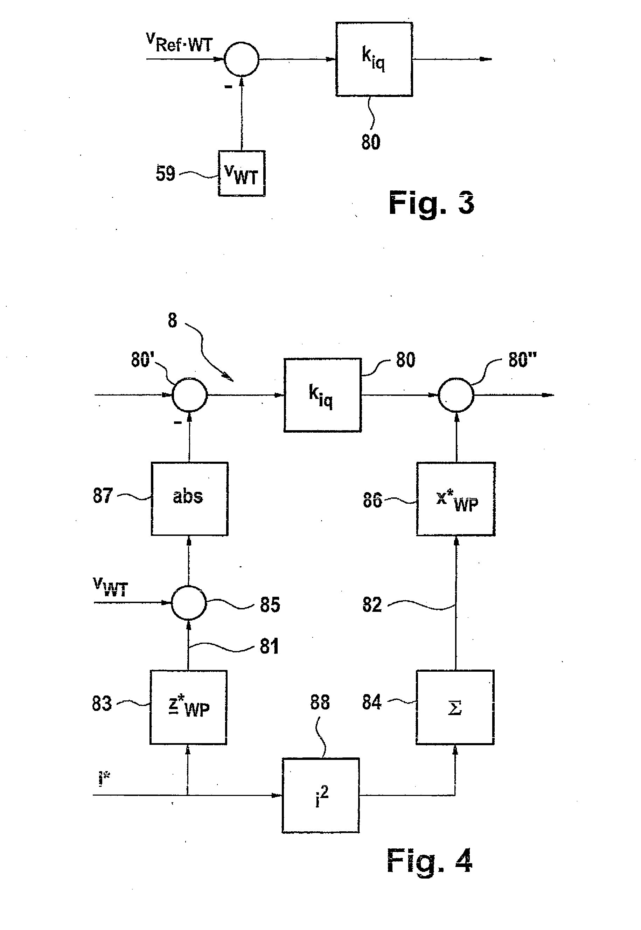

Über die Abgabe der Blindleistung wird, wie aus Fig. 1 unmittelbar klar wird, der Spannungsabfall über die Impedanzen und insbesondere Reaktanzen im jeweiligen Zweig des Verbindungsnetzes 3 bestimmt, über den die jeweilige Windenergieanlage 5 angeschlossen ist. Hierüber erfolgt die Blindleistungsregelung der Windenergieanlage 5. Deren Reglerkern 80 ist in Fig. 3 dargestellt. Er ist als Spannungsstatik mit einem Verstärkungswert k_{iq} ausgeführt, an den als Führungsgröße ein Signal für eine Sollspannung v_{refWT} angelegt ist. Es ist über einen positiven Eingang eines Differenzglieds geführt, an dessen negativen Eingang ein Signal für die tatsächlich an der Windenergieanlage 5 herrschende Spannung v_{WT} angelegt ist, das von einem Messaufnehmer 59 gemessen ist. Am Ausgang gibt der Reglerkern ein Signal für den vom Umrichter bereitzustellenden Quadraturstrom I_{qWTref} aus.

In Fig. 4 ist eine Erweiterung der Blindleistungsregelung um die erfindungsgemäße Doppelvorsteuerung 8 dargestellt. Sie umfasst einen linken Zweig 81 und einen rechten Zweig 82. Der linke Zweig 81 ist am Eingang des Reglerkerns 80 über ein eingangsseitiges Summationsglied 80' angeschlossen, während der rechte Zweig 82 über ein ausgangsseitiges Summationsglied 80" dem Ausgangssignal des Reglerkerns 80 hinzugefügt wird. Der linke Zweig 81 ist ausgebildet als ein Spannungsabfallschätzer für die Strecke 45 zwischen Windenergieanlage 5 und dem Verknüpfungspunkt 4. Er umfasst ein impedanzbasiertes Modell 83 dieser Strecke. An dieses ist als Eingangssignal der von der jeweiligen Windenergieanlage abgegebene Strom I* angelegt. Das Ausgangssignal des impedanzbasierten Modells 83 wird auf ein Summationsglied 85 gegeben, das weiter einen optionalen Eingang für die an der Windenergieanlage 5 herrschende Spannung v_{WT} aufweist. Das so gebildete Summensignal ist an ein Absolutwertglied 87 angeschlossen und wird invertiert an das eingangsseitige Summationsglied 80' angelegt. An den anderen Eingang des Summationsglieds 80' ist die zu erzielende Referenzspannung v_{ref} angelegt. Damit wird eine Abschätzung des Spannungsabfalls entlang der besagten Strecke 45 realisiert und als Zuschlagswert für die Führungsgröße an den Eingang des Reglerkerns 80 angelegt.

Der rechte Zweig 82 ist als ein Blindleistungskompensator ausgebildet und umfasst ein Digitalsignalintegrierer 84, an den ein reaktanzbasiertes Modell 86 der Strecke angeschlossen ist. Deren Ausgangssignal ist über das rechtsseitige Summationsglied 80" vorzeichenrichtig dem Ausgangssignal des Reglerkerns 80 aufgeschaltet. Der rechte Zweig 82 ist im Grundsatz mit demselben Eingangssignal beaufschlagt wie der linke Zweig 81, wird jedoch in einer Vorstufe mit einem Quadrierglied 88 quadriert. Mit dem Blindleistungskompensator wird auf diese Weise ein Schätzwert für die entlang der Strecke entstehenden Blindleistungsverluste generiert, der als Korrekturwert auf das Ausgangssignal des Reglerkerns 80 aufaddiert wird. Damit wird eine Feinkorrektur erreicht, die sich letztlich in einer verbesserten Genauigkeit der gesamten Regelung widerspiegelt.

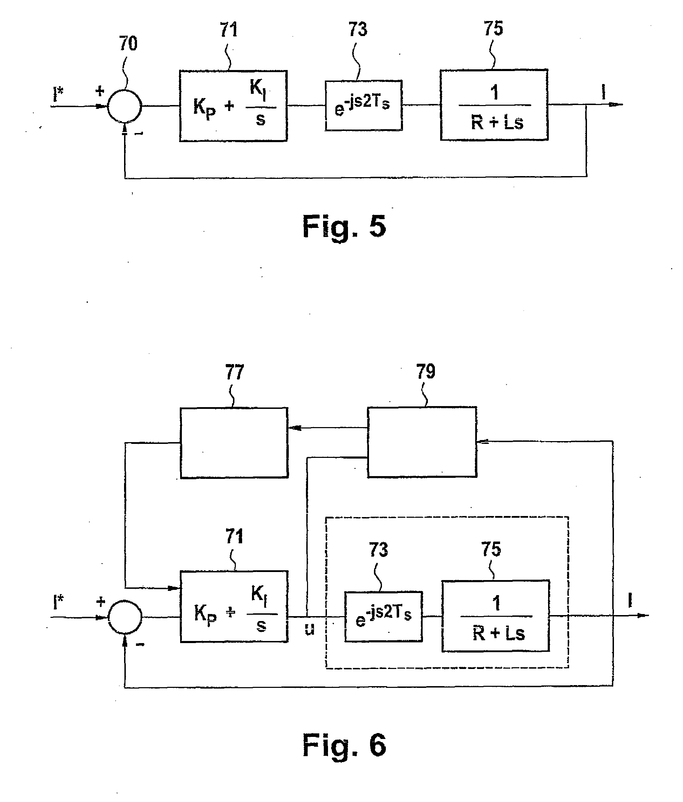

In Fig. 5 ist ein Blockdiagramm der Regelung des netzseitigen Wechselrichters 62 dargestellt. Der netzseitige Wechselrichter 62 ist generell derjenige, welcher für die Einspeisung von Blindleistung sorgt. Das gilt unabhängig vom Generatortyp: sowohl beim Synchrongenerator mit Vollumrichtung wie bei doppelt gespeisten Generator mit Teilumrichtung; bei der doppelt gespeisten Asynchronmaschine besteht auch die Möglichkeit, den maschinenseitigen Wechselrichter 61 zu verwenden. Das dargestellte Blockdiagramm zeigt in standardisierter Darstellung eine Regelschleife, die einen Regelungsblock 71, einen Wechselrichterblock 73 sowie einen Streckenblock 75 aufweist, wobei ein Ausgangssignal des Streckenblocks 75 zu einem am negativen Eingang des Regelungsblocks 71 angeordneten Differenzglied 70 führt, an dessen positiven Eingang eine Führungsgröße I* für den von dem netzseitigen Wechselrichter abzugebenden Strom angelegt ist. Der Streckenblock 75 bildet das für die Blindleistungsregelung relevante Verhalten der Windenergieanlage ab (Streckenmodell). Der Wechselrichterblock 73 bildet dementsprechend das für die Blindleistungsregelung relevante Verhalten des Wechselrichters 62 ab (Stellgliedmodell). Der Regelungsblock 71 bildet schließlich den eigentlichen Regelkern, welcher in dem dargestellten Ausführungsbeispiel als PI-Regler ausgeführt ist. Als Führungsgröße ist an die Summationsstelle 70 ein komplexes Signal für einen Sollstrom I* angelegt, wobei der tatsächlich von der Windenergieanlage 5 gemäß dem Streckenmodell 75 abgegebene Strom als Differenzsignal an die Summationsstelle 70 angelegt ist. Es handelt sich insoweit um eine konventionelle Regelung des netzseitigen Wechselrichters 62.

In Fig. 6 ist diese an sich bekannte Regelung gemäß einem Aspekt der vorliegenden Erfindung erweitert. Es ist ein Adaptionsglied 77 vorgesehen und weiter ein Beobachter 79 vorgesehen. Mittels des Beobachters 79 erfolgt eine Systemidentifizierung, wobei Parameter des Systems bestimmt werden, ohne dass sie direkt gemessen zu werden brauchen oder überhaupt messbar sein müssen. Im dargestellten Ausführungsbeispiel ist der Beobachter 79 dazu ausgebildet, den Einfluss der Strecke 45 von der jeweiligen Windenergieanlage 5 bis zum Verknüpfungspunkt 4 zu bestimmen. Dazu sind an den Beobachter 79 als Eingangsgrößen ohnehin verfügbare Parameter angelegt, nämlich das von dem Regelungsblock 71 an den Wechselrichterblock 73 angelegte Ausgangssignal u und das von dem Streckenblock 75 ausgegebene Stromsignal I in feldorientierter Darstellung mit seinen Komponenten I_{d} und Iq. Der Beobachter 79 ermittelt daraus die Schwäche des Verbindungsnetzes für den Anschluss der jeweiligen Windenergieanlage 5 und gibt das Ergebnis als Eingangssignal an das Adaptionsglied 77. Dieses bestimmt nach den bekannten Grundsätzen der adaptiven Regelung optimale Parameter für die Regelung im Regelungsblock 71.

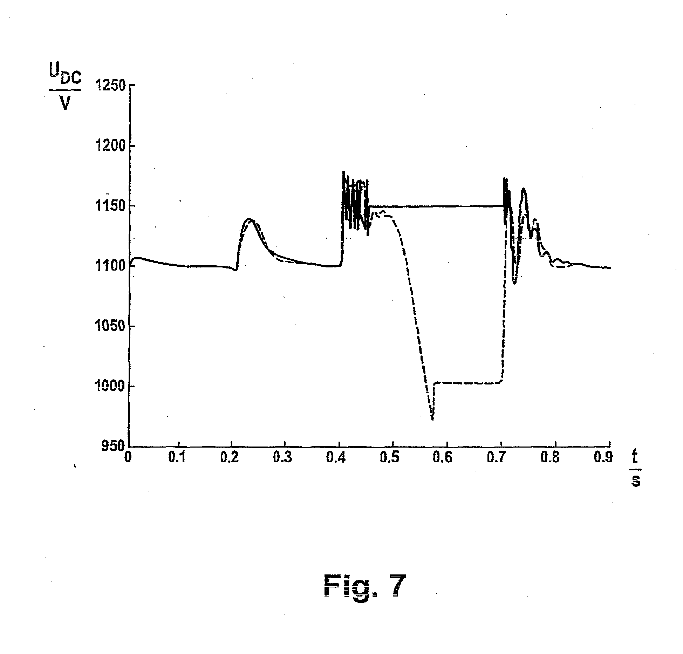

Die so erreichte Verbesserung ist in Fig. 7 dargestellt. Dargestellt ist die Spannung im Zwischenkreis 60 über der Zeit. Die gestrichelte Linie zeigt die herkömmliche Windenergieanlage im Windpark. Man erkennt das Auftreten von mehreren Störungen, wobei eine bei t=0,4s zu einer Instabilität mit gravierendem Spannungseinbruch führt. Der Spannungsverlauf mit der verbesserten Regelung gemäß Fig. 6 ist durch eine durchgezogene Linie dargestellt. Man erkennt, dass die Instabilität vermieden wird.

## Patentansprüche

1. Windenergieanlage mit einem Generator (50) mit einem Umrichter (6) zur Erzeugung elektrischer Energie und einer Betriebssteuerung (52), mit einem Eingang für Sollwertvorgaben eines Parkmasters (1), insbesondere zur Blindleistung, und einem Ausgang zur Abgabe der erzeugten elektrischen Energie über ein Windparkverbindungsnetz (3) an einem Verknüpfungspunkt (4) in ein Netz (9),
**dadurch gekennzeichnet, dass**
ein Blindleistungsregler der Betriebssteuerung (52) eine Doppelvorsteuerung (8) aufweist, die mit ihrem ersten Zweig (81) umfassend ein Spannungsvorsteuermodul am Eingang eines Reglerkerns (80) des Blindleistungsreglers und mit ihrem zweiten Zweig (82) umfassend ein Blindleistungsnachsteuermodul an dem Ausgang des Reglerkerns (80) angeschlossen sind.

2. Windenergieanlage nach Anspruch 1, **dadurch gekennzeichnet, dass** der erste und zweite Zweig (81, 82) an einem gemeinsamen Signaleingang, vorzugsweise für ein Stromsignal angeschlossen sind.

3. Windenergieanlage nach Anspruch 1 oder 2, **dadurch gekennzeichnet, dass** das Spannungsvorsteuermodul einen Spannungsabfallschätzer (83) für eine Strecke (45) von der Windenergieanlage (5) zum Verknüpfungspunkt (4) aufweist.

4. Windenergieanlage nach Anspruch 3, **dadurch gekennzeichnet, dass** der Spannungsabfallschätzer ein impedanzbasiertes Modell (83) der Strecke aufweist, in dem vorzugsweise ein Durchschnittswert der Impedanz zu den Windenergieanlagen (5) des Windparks implementiert ist.

5. Windenergieanlage nach einem der Ansprüche 3 oder 4, **dadurch gekennzeichnet, dass** am Spannungsabfallschätzer ein Eingang für eine Ist-Spannung an der jeweiligen Windenergieanlage vorgesehen ist.

6. Windenergieanlage nach einem der vorangehenden Ansprüche, **dadurch gekennzeichnet, dass** das Blindleistungsnachsteuermodul einen Blindleistungskompensator aufweist.

7. Windenergieanlage nach Anspruch 6, **dadurch gekennzeichnet, dass** der Blindleistungskompensator ein reaktanzbasiertes Modell (86) der Strecke (45) umfasst, in dem vorzugsweise ein Durchschnittswert der Reaktanz der Strecke implementiert ist.

8. Windenergieanlage nach einem der vorangehenden Ansprüche, **dadurch gekennzeichnet, dass** die Betriebssteuerung (52) einen Beobachter (79) für die Impedanz an der Windenergieanlage (5) aufweist, der mit einem Adaptionsglied (77) für Parameter der Betriebssteuerung (52) zusammenwirkt.

9. Windenergieanlage nach Anspruch 8, **dadurch gekennzeichnet, dass** das Adaptionsglied (77) auf einen Regler (64) wirkt, welcher auf den Umrichter (6) einwirkt, insbesondere einen PI-Regler.

10. Windenergieanlage nach Anspruch 8 oder 9, **dadurch gekennzeichnet, dass** in dem Adaptionsglied (77) mehrere Kennfelder implementiert sind, die je nach Betriebszustand der Windenergieanlage und/oder eines Windparks abrufbar sind.

11. Windenergieanlage nach einem der Ansprüche 8 bis 10, **dadurch gekennzeichnet, dass** an dem Beobachter (79) als Eingangsgröße Spannungs- und/oder Stromsignale der Windenergieanlage (5) und/oder Ausgangssignale der Betriebssteuerung (52) angelegt sind.

12. Windenergieanlage nach Anspruch 11, **dadurch gekennzeichnet, dass** als Eingangssignal zusätzlich Spannungs- und/oder Stromsignale anderer Windenergieanlagen (5) angelegt sind.

13. Windenergieanlage nach einem der Ansprüche 8 bis 12, **dadurch gekennzeichnet, dass** der Beobachter (79) mit dem Spannungsabfallschätzer zusammenwirkt, und zwar vorzugsweise derart, dass eine Differenz zu einem Impedanzsignal am Verknüpfungspunkt (4) gebildet und als Signal für das impedanzbasierte Modell (83) fungiert.

14. Windpark mit mindestens zwei Windenergieanlagen (5), die jeweils einen Generator (50) mit einem Umrichter (6) zur Erzeugung elektrischer Energie und eine Betriebssteuerung (52) mit einem Blindleistungsregler aufweisen,
einem Parkmaster (1) zur zentralen Kontrolle der Windenergieanlagen (5) über ein Kommunikationsnetz (2),
einem Verbindungsnetz (3), welches die Windenergieanlagen (5) verbindet mit einem Verknüpfungspunkt (4) zur Einspeisung der erzeugten elektrischen Energie in ein Netz (9), und
einer Messeinrichtung (12, 13) zum Bestimmen elektrischer Parameter am Verknüpfungspunkt (4), wobei der Parkmaster (1) dazu ausgebildet ist, elektrische Parameter am Verknüpfungspunkt (4) zu bestimmen und Sollwerte an die Windenergieanlage (5) zu übermitteln,
**dadurch gekennzeichnet, dass**
der Blindleistungsregler der jeweiligen Windenergieanlage (5) eine Doppelvorsteuerung (8) aufweist, die mit ihrem ersten Zweig (81) umfassend ein Spannungsvorsteuermodul am Eingang eines Reglerkerns (80) des Blindleistungsreglers und mit ihrem zweiten Zweig (82) umfassend ein Blindleistungsnachsteuermodul an dem Ausgang des Reglerkerns (80) angeschlossen sind.

15. Windpark nach Anspruch 14, **dadurch gekennzeichnet, dass** er nach einem der Ansprüche 2 bis 13 weitergebildet ist.

16. Verfahren zum Betreiben einer Windenergieanlage (5) mit einem Generator (50) mit einem Umrichter (6) zur Erzeugung elektrischer Energie und einer Betriebssteuerung (52), wobei ein Maß für eine Blindleistung an die Windenergieanlage (5) angelegt ist,
**dadurch gekennzeichnet, dass**
lokal an der Windenergieanlage ein Schätzwert berechnet wird für einen Spannungsverlust einer Strecke von der Windenergieanlage zum Verknüpfungspunkt und Aufschalten auf einen Eingang eines Reglerkerns (80) des Blindleistungsreglers, und
lokal an der Windenergieanlage ein Schätzwert berechnet wird für einen Blindleistungsverlust der Strecke bis zum Verknüpfungspunkt (4) und Aufschalten auf einen Ausgang des Reglerkerns(80).

17. Verfahren nach Anspruch 16, **dadurch gekennzeichnet, dass** es nach einem der Ansprüche 2 bis 13 weitergebildet ist.

## Claims

1. Wind turbine having a generator (50) with a converter (6) for generating electrical energy and an operating controller (52) with an input for nominal value presets of a farm master (1), in particular for reactive power, and an output for outputting the generated electrical energy via a wind farm connection network (3) to a coupling point (4) in a grid (9),
**characterized in that**
a reactive power controller of the operating controller (52) has a double feed-forward controller (8) which is connected with its first branch (81) comprising a voltage feed-forward control module to the input of a controller core (80) of the reactive power controller and with its second branch (82) comprising a reactive power adjustment module to the output of the controller core (80).

2. Wind turbine according to Claim 1, **characterized in that** the first and second branch (81, 82) are connected to a common signal input, preferably for a current signal.

3. Wind turbine according to Claim 1 or 2, **characterized in that** the voltage feed-forward control module has a voltage drop estimation unit (83) for a path (45) from the wind turbine (5) to the coupling point (4).

4. Wind turbine according to Claim 3, **characterized in that** the voltage drop estimation unit has an impedance-based model (83) of the path, in which an average value of the impedance to the wind turbines (5) of the wind farm is preferably implemented.

5. Wind turbine according to either of Claims 3 and 4, **characterized in that** an input for an actual voltage across the respective wind turbine is provided on the voltage drop estimation unit.

6. Wind turbine according to any of the preceding claims, **characterized in that** the reactive power adjustment module has a reactive power compensator.

7. Wind turbine according to Claim 6, **characterized in that** the reactive power compensator comprises a reactance-based model (86) of the path (45), in which an average value of the reactance of the path is preferably implemented.

8. Wind turbine according to any of the preceding claims, **characterized in that** the operating controller (52) has a monitor (79) for the impedance across the wind turbine (5), which cooperates with an adaptation member (77) for parameters of the operating controller (52).

9. Wind turbine according to Claim 8, **characterized in that** the adaptation member (77) acts on a controller (64) which acts upon the converter (6), in particular a PI controller.

10. Wind turbine according to either of Claims 8 and 9, **characterized in that** a plurality of characteristic curves are implemented in the adaptation member (77), which characteristic curves are retrievable depending on the operating state of the wind turbine and/or of a wind farm.

11. Wind turbine according to any of Claims 8 to 10, **characterized in that** voltage and/or current signals of the wind turbine (5) and/or output signals of the operating controller (52) are applied to the monitor (79) as input variables.

12. Wind turbine according to Claim 11, **characterized in that**, in addition, voltage and/or current signals of other wind turbines (5) are applied as input signal.

13. Wind turbine according to any of Claims 8 to 12, **characterized in that** the monitor (79) cooperates with the voltage drop estimation unit and, more precisely, preferably in such a way that a difference to an impedance signal at the coupling point (4) is formed and acts as signal for the impedance-based model (83).

14. Wind farm having at least two wind turbines (5), which each have a generator (50) with a converter (6) for generating electrical energy and an operating controller (52) with a reactive power controller,
a farm master (1) for central control of the wind turbines (5) via a communications network (2),
a connection network (3), which connects the wind turbines (5) to a coupling point (4) for feeding the generated electrical energy into a grid (9), and
a measuring device (12, 13) for determining electrical parameters at the coupling point (4), wherein the farm master (1) is designed to determine electrical parameters at the coupling point (4) and to transfer nominal values to the wind turbine (5),
**characterized in that**
the reactive power controller of the respective wind turbine (5) has a double feed-forward controller (8) which is connected with its first branch (81) comprising a voltage feed-forward control module to the input of a controller core (80) of the reactive power controller and with its second branch (82) comprising a reactive power adjustment module to the output of the controller core (80).

15. Wind farm according to Claim 14, **characterized in that** it is developed according to any of Claims 2 to 13.

16. Method for operating a wind turbine (5) having a generator with a converter (6) for generating electrical energy and an operating controller (52), wherein a measure for a reactive power is applied to the wind turbine (5),
**characterized in that**
an estimated value for a voltage drop across a path of the wind turbine to the coupling point and entering an input of a controller core (80) of the reactive power controller is calculated locally at the wind turbine, and
an estimated value for a reactive power loss over the path to the coupling point (4) and entering an output of the controller core (80) is calculated locally at the wind turbine.

17. Method according to Claim 16, **characterized in that** it is developed according to any of Claims 2 to 13.

## Revendications

1. Éolienne comportant un générateur (50) avec un convertisseur de fréquence (6) pour générer une énergie électrique et une commande de fonctionnement (52), comportant une entrée pour des objectifs de valeurs de consigne d'un maître du parc (1), en particulier pour la puissance réactive, et une sortie pour fournir l'énergie électrique générée via un réseau de liaison du parc éolien (3) à un réseau (9) au niveau d'un point de couplage (4),
**caractérisée en ce que**
un régulateur de puissance réactive de la commande de fonctionnement (52) comporte une commande pilote double (8) qui est raccordée par sa première branche (81), munie d'un module de commande amont de la tension, à une entrée d'un noyau de réglage (80) du régulateur de puissance réactive et est raccordée par sa deuxième branche (82), munie d'un module de commande aval de la puissance réactive, à la sortie du noyau de réglage (80).

2. Éolienne selon la revendication 1, **caractérisée en ce que** la première et la deuxième branche (81, 82) sont raccordées à une entrée de signaux commune, de préférence pour un signal de courant.

3. Éolienne selon la revendication 1 ou 2, **caractérisée en ce que** le module de commande amont de la tension comporte un analyseur de chute de tension (83) pour un trajet (45) menant depuis l'éolienne (5) jusqu'au point de couplage (4).

4. Éolienne selon la revendication 3, **caractérisée en ce que** l'analyseur de chute de tension comporte un modèle (83), basé sur l'impédance, du trajet, dans lequel est implémentée de préférence une valeur moyenne de l'impédance pour les éoliennes (5) du parc éolien.

5. Éolienne selon la revendication 3 ou 4, **caractérisée en ce qu'**au niveau de l'analyseur de chute de tension est prévue une entrée pour une tension réelle sur l'éolienne respective.

6. Éolienne selon l'une quelconque des revendications précédentes, **caractérisée en ce que** le module de commande aval de la puissance réactive comporte un compensateur de puissance réactive.

7. Éolienne selon la revendication 6, **caractérisée en ce que** le compensateur de puissance réactive comporte un modèle (86), basé sur la réactance, du trajet (45), dans lequel est implémentée de préférence une valeur moyenne de la réactance du trajet.

8. Éolienne selon l'une quelconque des revendications précédentes, **caractérisée en ce que** la commande de fonctionnement (52) comporte un observateur (79) pour l'impédance au niveau de l'éolienne (5), lequel coopère avec un organe d'adaptation (77) pour des paramètres de la commande de fonctionnement (52).

9. Éolienne selon la revendication 8, **caractérisée en ce que** l'organe d'adaptation (77) agit sur un régulateur (64), qui influe sur le convertisseur de fréquence (6), en particulier un régulateur PI.

10. Éolienne selon la revendication 8 ou 9, **caractérisée en ce que** dans l'organe d'adaptation (77) sont implémentées plusieurs zones caractéristiques qui peuvent être interrogées en fonction de l'état de fonctionnement de l'éolienne et/ou d'un parc éolien.

11. Éolienne selon l'une quelconque des revendications 8 à 10, **caractérisée en ce qu'**à l'observateur (79) sont appliqués des signaux de tension et/ou de courant, en tant que grandeurs d'entrée, de l'éolienne (5) et/ou des signaux de sortie de la commande de fonctionnement (52).

12. Éolienne selon la revendication 11, **caractérisée en ce qu'**en tant que signal d'entrée sont appliqués, en plus, des signaux de tension et/ou de courant d'autres éoliennes (5).

13. Éolienne selon l'une quelconque des revendications 8 à 12, **caractérisée en ce que** l'observateur (79) coopère avec l'analyseur de chute de tension, à savoir de préférence de telle sorte qu'une différence par rapport à un signal d'impédance est formée au niveau du point de couplage (4) et fait fonction de signal pour le modèle (83) basé sur l'impédance.

14. Parc éolien comportant au moins deux éoliennes (5), qui comportent chacune un convertisseur de fréquence (6) pour générer une énergie électrique et une commande de fonctionnement (52) munie d'un régulateur de puissance réactive,
un maître de parc (1) pour le contrôle central des éoliennes (5) via un réseau de communication (2),
un réseau de liaison (3) qui relie les éoliennes (5) à un point de couplage (4) pour injecter l'énergie électrique générée dans un réseau (9), et
un dispositif de mesure (12, 13) pour déterminer les paramètres électriques au niveau du point de couplage (4), le maître de parc (1) étant adapté pour déterminer les paramètres électriques au niveau du point de couplage (4) et pour transmettre des valeurs de consigne à l'éolienne (5),
**caractérisé en ce que**
le régulateur de puissance réactive de l'éolienne (5) respective comporte une commande pilote double (8) qui est raccordée par sa première branche (81), munie d'un module de commande amont de la tension, à une entrée d'un noyau de réglage (80) du régulateur de puissance réactive et est raccordée par sa deuxième branche (82), munie d'un module de commande aval de la puissance réactive, à la sortie du noyau de réglage (80).

15. Parc éolien selon la revendication 14, **caractérisé en ce qu'**il est configuré selon l'une des revendications 2 à 13.

16. Procédé permettant l'exploitation d'une éolienne (5) comportant un générateur (50) avec un convertisseur de fréquence (6) pour générer une énergie électrique et une commande de fonctionnement (52), une mesure pour une puissance réactive étant appliquée à l'éolienne (5),
**caractérisé en ce que**
localement sur l'éolienne est calculée une valeur d'estimation pour une perte de tension sur un trajet menant de l'éolienne au point de couplage et l'application à une entrée d'un noyau de réglage (80) du régulateur de puissance réactive, et
localement sur l'éolienne est calculée une valeur d'estimation pour une perte de puissance réactive sur le trajet menant vers le point de couplage (4) et l'application à une sortie du noyau de réglage (80).

17. Procédé selon la revendication 16, **caractérisé en ce qu'**il est conçu, en plus, selon l'une des revendications 2 à 13.
